(19) **Europäisches Patentamt**
**European Patent Office**
**Office européen des brevets**

(11) **EP 2 815 114 B1**

(12) **FASCICULE DE BREVET EUROPEEN**

(45) Date de publication et mention
de la délivrance du brevet:
**27.09.2017  Bulletin 2017/39**

(51) Int Cl.:
*F02B 37/12* *(2006.01)*    *F02B 37/24* *(2006.01)*
*F02D 41/00* *(2006.01)*    *F02D 41/14* *(2006.01)*

(21) Numéro de dépôt: **13703074.8**

(22) Date de dépôt: **08.02.2013**

(86) Numéro de dépôt international:
**PCT/EP2013/052496**

(87) Numéro de publication internationale:
**WO 2013/120772 (22.08.2013 Gazette 2013/34)**

(54) **SYSTÈME ET PROCÉDÉ D'ESTIMATION DU RAPPORT ENTRE LA PRESSION EN AMONT ET LA PRESSION EN AVAL DE LA TURBINE D'UN MOTEUR SURALIMENTÉ D'UN VÉHICULE AUTOMOBILE**

VERFAHREN ZUR SCHÄTZUNG DER BEZIEHUNG ZWISCHEN DEM DRUCK VOR UND HINTER DER TURBINE KOMPRESSORMOTOR.

SYSTEM AND METHOD FOR ESTIMATING OF THE RATIO BETWEEN UPSTREAM AND DOWNSTREAM PRESSURE IN A TURBINE FOR AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2012  FR 1251468**

(43) Date de publication de la demande:
**24.12.2014  Bulletin 2014/52**

(73) Titulaire: **Renault S.A.S.**
**92100 Boulogne-Billancourt (FR)**

(72) Inventeurs:
• **TALON, Vincent**
  **F-78180 Montigny Le Bretonneux (FR)**
• **CASTILLO, Felipe**
  **F-38000 Grenoble (FR)**
• **WITRANT, Emmanuel**
  **F-38420 Saint Jean Le Vieux (FR)**

(56) Documents cités:
**FR-A1- 2 910 059        FR-A3- 2 963 059**
**US-A1- 2012 023 932**

**Description**

L'invention a pour domaine technique le contrôle de l'admission d'air des moteurs à suralimentation en air, et plus particulièrement le contrôle de la pression en amont de la turbine de suralimentation en air.

Les normes de dépollution poussent les constructeurs à concevoir des moteurs toujours plus performants. Cela a pour conséquence directe l'explosion du coût de ces moteur, notamment des moteurs Diesel, à cause de l'introduction de nouveaux organes comme les lignes de recirculation partielle des gaz d'échappement vers l'admission (EGR), les systèmes de post traitement (filtre à particules, pièges à oxydes d'azote...), et l'augmentation de la complexité des turbocompresseurs. Ces systèmes interagissent entre eux et demandent un très haut niveau de contrôle afin de ne pas dégrader le fonctionnement de l'ensemble. Parmi toutes les grandeurs qui nécessitent un contrôle précis, la pression de suralimentation doit être considérée en particulier. Cette pression de suralimentation permet d'atteindre le niveau de performance requis en termes de puissance et de déterminer de taux d'EGR à appliquer sur les différents points de fonctionnement du moteur. Cette consigne de pression de suralimentation doit être aussi bien respectée en fonctionnement stabilisé qu'en fonctionnement transitoire.

Les solutions de contrôle appliquées aujourd'hui donnent encore satisfaction sur des cycles d'homologation relativement simples, mais vont très vite montrer leurs limites sur des cycles plus contraignants comme ceux envisagés pour la norme Euro7 dont l'application est prévue en 2017. La plupart de ces méthodes utilisent en entrée la mesure de pression des gaz en amont de la turbine ($P_{avt}$).

Aujourd'hui, la pression en amont de la turbine est mesurée avec un capteur de pression qui malheureusement n'est pas très fiable. De plus sous certaines conditions de fonctionnement, la mesure est impossible. Pour s'affranchir de ce problème, on utilise le taux de détente à travers la turbine qui correspond au rapport entre la pression en amont et la pression en aval de la turbine. Ce taux de détente se calcule en manipulant les cartographies caractéristiques de la turbine et en faisant des réductions de modèles. US2012/023932 décrit un procédé d'estimation de ce taux de détente. Il existe un besoin pour une méthode d'estimation robuste de la pression des gaz en amont de la turbine et permettant de garantir une estimation fiable sur tous les points de fonctionnement, notamment en fonctionnement transitoire.

On propose un procédé d'estimation du rapport entre la pression en amont et la pression en aval de la turbine d'un turbocompresseur d'un véhicule automobile. Le procédé comprend les étapes suivantes :

on obtient l'estimation du débit massique de la turbine, de la vitesse de rotation de la turbine et de la température en amont de la turbine et la mesure de la position des ailettes de la turbine à géométrie variable et de la pression en aval de la turbine,
on initialise l'estimateur,
on détermine la valeur d'une première variable interne en fonction de l'estimation du débit massique de la turbine, de la vitesse de rotation de la turbine et de la température en amont de la turbine et de la mesure de la position des ailettes de la turbine à géométrie variable et de la pression en aval de la turbine ainsi que de la valeur d'initialisation de l'estimateur,
on détermine la valeur d'une deuxième variable interne en fonction de l'estimation du débit massique de la turbine, de la vitesse de rotation de la turbine et de la température en amont de la turbine et de la mesure de la position des ailettes de la turbine à géométrie variable et de la pression en aval de la turbine, de la valeur d'initialisation de l'estimateur, et d'une variation de rapport de pressions,
on détermine la dérivée des variables internes, en fonction des valeurs des variables internes et d'une variation de rapport de pressions, et
on obtient la valeur estimée du rapport de pressions en fonction de la dérivée des variables internes, de la valeur de la première variable interne et de la valeur d'initialisation de l'estimateur.

On peut initialiser l'estimateur avec la valeur estimée du rapport de pressions à l'instant de calcul précédent.

On peut initialiser l'estimateur avec la mesure de la pression en amont de la turbine.

On peut initialiser l'estimateur avec une valeur prédéterminée issue d'une cartographie.

On peut déterminer ladite variation de rapport de pressions.

On peut fournir une valeur mémorisée de ladite variation de rapport de pressions.

On propose également un système d'estimation du rapport entre la pression en amont et la pression en aval de la turbine d'un turbocompresseur d'un véhicule automobile. Le système comprend un moyen d'initialisation de l'estimateur, un moyen d'estimation de la valeur d'une première variable interne relié en entrée à des moyens de détermination des valeurs du débit massique de la turbine, de la vitesse de rotation de la turbine et de la température en amont de la turbine, de la position des ailettes de la turbine à géométrie variable et de la pression en aval de la turbine et au moyen d'initialisation de l'estimateur, un moyen d'estimation de la valeur d'une deuxième variable interne relié en entrée à des moyens de détermination des valeurs du débit massique de la turbine, de la vitesse de rotation de la turbine et de la température en amont de la turbine, de la position des ailettes de la turbine à géométrie variable et de la pression en aval de la turbine et au moyen d'initialisation de l'estimateur et à un moyen d'initialisation de la valeur d'une variation de rapport de pressions, un moyen d'estimation de la dérivée des variables internes relié en entrée au moyen d'estimation de la valeur d'une première variable interne et au moyen d'estimation de la valeur d'une deuxième variable interne, et un moyen d'estimation de la valeur du rapport de pressions relié en entrée au moyen d'estimation de la dérivée des variables internes, au moyen d'initialisation de l'estimateur et au moyen d'estimation de la valeur de la première variable interne.

Le moyen d'initialisation de l'estimateur peut comprendre au moins un élément parmi une mémoire comprenant la valeur estimée du rapport de pressions à l'instant de calcul précédent, une connexion à un capteur de pression en amont de la turbine ou une cartographie d'une valeur d'initialisation.

Le moyen d'initialisation de la valeur de ladite variation de rapport de pressions peut comprendre une mémoire comprenant ladite valeur de variation de rapport de pressions.

Le moyen d'initialisation de la valeur de ladite variation de rapport de pressions peut comprendre un moyen d'estimation en fonction de la valeur estimée du rapport de pressions à l'instant de calcul précédent et d'une relation prédéterminée.

Le procédé et le système d'estimation présentent les avantages suivants. L'estimation de la pression des gaz en amont de la turbine permet de mieux contrôler les systèmes de suralimentation notamment lors de fonctionnements fortement transitoires. En effet cette information permet d'éviter des dépassements de consignes avec risque de casse du turbocompresseur, mais aussi de suivre des trajectoires de la pression des gaz en amont de la turbine au lieu de suivre la pression de suralimentation (côté admission) dans certains cas particuliers.

L'autre avantage est de pouvoir accéder à la contre-pression d'échappement et donc de pouvoir mieux calculer les masses enfermées (masse de gaz frais, d'EGR et de gaz résiduels).

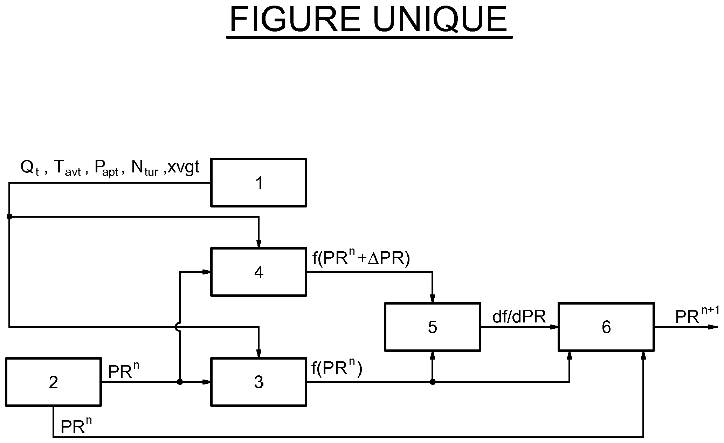

D'autres buts, caractéristiques et avantages apparaîtront à la lecture de la description suivante donnée uniquement en tant qu'exemple non limitatif et faite en référence au dessin annexé sur lequel la figure unique illustre un procédé d'estimation du rapport de pressions entre l'amont et l'aval d'une turbine.

Différentes stratégies peuvent être utilisées pour estimer la pression avant la turbine. Parmi ces stratégies, il existe l'approche dynamique et l'approche statique.

L'approche dynamique n'est pas appropriée pour ce type application à cause des variations trop rapides par rapport à la fréquence d'échantillonnage du système embarqué. Dès lors, on préférera l'approche statique. En effet, l'approche statique permet d'utiliser les mesures ou les estimations déjà disponibles dans le moteur pour trouver une valeur de pression avant turbine indépendamment de la fréquence d'échantillonnage. La principale problématique avec l'estimation statique de la pression d'échappement vient de la corrélation forte entre le débit massique et le taux de détente de la turbine. En effet, l'équation suivante donne la relation entre ces deux quantités.

$$Q_t = carto\left( xvgt, \frac{N_{tur}\sqrt{T_{ref}}}{\sqrt{T_{avt}}}, PR_t \right) \frac{P_{avt}\sqrt{T_{ref}}}{P_{ref}\sqrt{T_{avt}}} \qquad (Eq. 1)$$

Avec

$N_{tur}$: la vitesse de rotation de la turbine
$P_{avt}$ : la pression à l'échappement
$T_{avt}$ : la température avant la turbine
$Q_t$ : le débit massique de la turbine
xvgt : la position des ailettes de la turbine
$PR_t$ : le rapport de pressions de la turbine
$P_{ref}$ : la pression de référence
$T_{ref}$ : la température de référence

L'équation 1 montre que, en ayant le rapport de pressions, la vitesse de rotation de la turbine, la position des ailettes et les conditions en amont de la turbine, il est possible de trouver une valeur de débit massique à travers la turbine. Mais, dans le cas où seul débit massique est connu, il n'est pas possible analytiquement de résoudre l'équation 1. Pour pallier cet inconvénient, il existe des procédures pour résoudre ce type de problème. Elles consistent, classiquement, à disposer d'algorithmes itératifs qui malheureusement, peuvent demander beaucoup de ressources (temps CPU) et qui souvent entrainent en plus des problèmes de stabilité.

Pour estimer la pression en amont de la turbine, l'algorithme de Newton-Raphson va être utilisé pour résoudre l'équation 1. Toutefois, au lieu d'itérer sur chaque pas de temps, l'algorithme va être modifié pour itérer au travers du temps. En d'autres termes, cela signifie que l'on fait l'hypothèse que l'algorithme de Newton-Raphson va permettre de converger vers une solution de l'équation 1 plus rapidement que l'évolution dynamique du système gouvernant la pression en amont de la turbine. Les avantages de cet algorithme sont les suivants :

- sur chaque pas de temps, il ne faut évaluer l'équation 1 que deux fois, et
- il permet de maîtriser la vitesse avec laquelle la solution est obtenue, ce qui améliore grandement la robustesse.

L'algorithme de Netwon-Raphson est décrit par l'équation suivante :

$$x^{i+1} = x^i - \alpha \frac{f(x^i)}{f'(x^i)} \qquad \text{(Eq. 2)}$$

dans laquelle $\alpha$ correspond à une constante $0 < \alpha \leq 1$ permettant de ralentir la vitesse de convergence vers la solution. Le but est d'obtenir $PR_t$ en ayant uniquement l'estimation de $Q_t$, de $N_{tur}$ et de $T_{avt}$ et la mesure de xvgt et de $P_{apt}$.

Par ailleurs, on définit la fonction f suivante :

$$f = Q_t - Q_t^i \qquad \text{(Eq. 3)}$$

Avec :

$$Q_t^i = carto\left( xvgt, \frac{N_{tur}\sqrt{T_{ref}}}{\sqrt{T_{avt}}}, PR_t^i \right) \frac{P_{apt} PR_t^i \sqrt{T_{ref}}}{P_{ref}\sqrt{T_{avt}}} \qquad \text{(Eq. 4)}$$

Avec

i : occurrence i
carto() : Cartographie fonction des variables
$PR_t^i$ : Rapport de pression au temps t pour l'occurrence i

Le critère de convergence s'écrit alors de la façon suivante :

$$|f| < e$$

Avec e : le seuil du critère de convergence.

Le débit turbine est estimé à partir du débit moteur et du débit EGR. Ce débit moteur peut par exemple être une cartographie fonction de la vitesse de rotation du moteur et de la pression dans le collecteur d'admission. Le débit EGR peut être estimé comme la différence entre le débit moteur et le débit d'air mesuré par le débitmètre admission.

Dans l'équation 4, $P_{apt}$ représente la mesure de la pression après la turbine. Pour pouvoir appliquer l'équation 2, il faut connaitre la dérivée de f par rapport à $PR_t^i$. Cette dérivée est assez complexe à obtenir à cause de la cartographie de débit turbine qui est une cartographie hautement non linéaire fonction notamment de la vitesse de rotation, du débit, de la position des ailettes. Pour pallier cet inconvénient, on utilise généralement des informations au pas de temps n-1 comme dans les algorithmes de type « quasi Newton » ou « sécante ». Cependant, l'utilisation de telles informations impose l'utilisation d'un tampon de données qui présente le désavantage de temporiser le résultat d'estimation et de conférer une inertie au système. Pour éviter un tel désavantage, on calcule cette dérivée numériquement de la façon suivante :

$$\frac{df(PR)}{dPR} \approx \frac{f(PR + \Delta PR) - f(PR)}{\Delta PR} \qquad \text{(Eq. 5)}$$

En prenant $\Delta PR$ très petit, on peut obtenir une valeur approchée de la dérivée. Le terme $\Delta PR$ correspond à une très faible variation de PR qui permet juste d'approximer la dérivée au pas de temps n.

Dans l'équation 5, on voit l'intérêt d'évaluer f deux fois sur chaque pas de temps, une fois pour obtenir f(PR) et une fois pour obtenir f(PR+ΔPR). L'algorithme original de Newton-Raphson (Eq. 2) est répété par itérations successives jusqu'à que f<e .Avec l'approche Newton-Raphson, l'algorithme peut réaliser plusieurs itérations pour assurer la convergence vers ce critère, chose qui pose problème dans un système embarqué qui tourne en temps réel. De plus, la convergence de l'algorithme de Newton-Raphson n'est pas garantie si le point initial n'est pas suffisamment proche de la solution. C'est pourquoi cette approche itérative est écartée au profit de la solution suivante.

A la place de l'algorithme original, nous allons calculer la valeur $PR^{n+1}$ en utilisant l'équation 2 ainsi :

$$PR^{n+1} = PR^n - \alpha \frac{f(PR^n)}{f'(PR^n)} \qquad \text{(Eq. 6)}$$

Dans l'équation 6, $PR^{n+1}$ est la valeur du rapport de pressions pour le pas de temps n+1 suivant le pas de temps n. Cette approche peut être réalisée car l'inertie du système ne permet pas des variations du débit massique ou de la température échappement plus rapides que la vitesse de convergence de l'algorithme. Par contre l'inertie du système permet à l'algorithme de s'approcher de la solution pendant l'intervalle entre deux pas de temps de calcul. De plus, plus grande est la valeur de $\alpha$, plus vite l'algorithme converge vers la solution, mais en contrepartie il est moins robuste. Le terme $\alpha$ introduit plus haut, permet de réguler la vitesse de convergence et donc de contrôler la robustesse de l'estimation. Le terme $\alpha$ doit être compris entre 0 et 1.

Cet estimateur permet de calculer la pression en amont de la turbine $P_{avt}$ au pas de temps n+1 en utilisant que les informations au pas de temps n. Les méthodes traditionnelles calculent une solution en itérant plusieurs fois (solution non déterministe) chaque pas de temps jusqu'à atteindre le critère de convergence. Ces méthodes utilisent l'information du pas de temps n pour trouver la solution au temps n. Toute la subtilité de cette méthode non itérative repose dans la façon de calculer la dérivée de la fonction « f ». Pour l'initialisation de l'estimateur (c'est-à-dire $PR^n$ pour n=0), on prend soit la mesure du capteur de pression en amont de la turbine $P_{avt}$ si une telle mesure est disponible et valable, soit une valeur prédéterminée qui dépend des conditions de fonctionnement (par exemple, une cartographie fonction de la vitesse de rotation et de la charge du moteur). Une fois initialisé, l'estimateur est autonome.

Le procédé d'estimation est illustré par la figure unique.

On peut voir une première étape 1 de collecte des informations du véhicule au cours de laquelle on obtient l'estimation du débit massique de la turbine $Q_t$, de la vitesse de rotation $N_{tur}$ de la turbine et de la température $T_{avt}$ avant la turbine et la mesure de la position xvgt des ailettes de la turbine à géométrie variable et de la pression $P_{apt}$ après la turbine.

A l'étape 2, on initialise l'estimateur avec la valeur $PR^n$ du rapport de pressions au temps n. Si l'estimateur ne dispose pas de valeurs de $PR^n$ précédemment estimée, on lui fournit soit la mesure de la pression en amont de la turbine $P_{avt}$ si une telle mesure est disponible et valable, soit une valeur prédéterminée.

A l'étape 3, on détermine la valeur $f(PR^n)$ d'une première variable interne en fonction des valeurs $Q_t$, $N_{tur}$, $T_{avt}$, xvgt et $P_{apt}$ et de la valeur $PR^n$ en appliquant les équations 3 et 4.

A l'étape 4, on détermine la valeur $f(PR^n+\Delta PR)$ d'une deuxième variable interne en fonction des valeurs $Q_t$, $N_{tur}$, $T_{avt}$, xvgt et $P_{apt}$ et de la valeur $PR^n$, et d'un écart $\Delta PR$ prédéterminé en appliquant également les équations 3 et 4.

A l'étape 5, on détermine la dérivée de la fonction f par rapport à la valeur PR, en fonction de la valeur $f(PR^n)$ de la première variable interne et de la valeur $f(PR^n+\Delta PR)$ de la deuxième variable interne en appliquant l'équation 5.

A l'étape 6, on obtient la valeur $PR^{n+1}$ en fonction de la dérivée de la fonction f par rapport à la valeur PR, de la valeur $f(PR^n)$ de la première variable interne et de la valeur $PR^n$ en appliquant l'équation 6.

Le système d'estimation mettant en oeuvre un tel procédé comprend un moyen d'estimation de la valeur $f(PR^n)$ de la première variable interne relié en entrée à des moyens de détermination des valeurs $Q_t$, $N_{tur}$, $T_{avt}$, xvgt et $P_{apt}$ et à un moyen d'initialisation de l'estimateur.

Le moyen d'initialisation de l'estimateur peut comprendre au moins un élément parmi une mémoire d'une valeur $PR^n$ précédemment déterminée, une connexion à un capteur de pression en amont de la turbine ou une cartographie d'une valeur d'initialisation.

Le système d'estimation comprend également un moyen d'estimation de la valeur $f(PR^n+\Delta PR)$ de la deuxième variable interne relié en entrée à des moyens de détermination des valeurs $Q_t$, $N_{tur}$, $T_{avt}$, xvgt et $P_{apt}$ et au moyen d'initialisation de l'estimateur et à une mémoire comprenant la valeur DPR. Alternativement, la valeur $\Delta PR$ peut être estimée par un moyen d'estimation en fonction de la valeur $PR^n$ et d'une relation prédéterminée.

Le système d'estimation comprend un moyen d'estimation de la dérivée de la fonction f relié en entrée au moyen d'estimation de la valeur $f(PR^n)$ de la première variable interne et au moyen d'estimation de la valeur $f(PR^n+\Delta PR)$ de la deuxième variable interne.

Un moyen d'estimation de la valeur $PR^{n+1}$ est relié en entrée au moyen d'estimation de la dérivée de la fonction f, au moyen d'initialisation de l'estimateur et au moyen d'estimation de la valeur $f(PR^n)$ de la première variable interne. Le moyen d'estimation de la valeur $PR^{n+1}$ est relié en sortie à la sortie du système d'estimation.

Le procédé et le système d'estimation permettent de déterminer le rapport de pressions entre l'entrée et la sortie de la turbine, ce qui permet de déduire la pression en amont de la turbine en fonction d'une mesure de pression en aval de la turbine. L'estimation converge rapidement entre deux pas de calcul ce qui permet une détermination efficace même lors d'un fonctionnement transitoire.

**Revendications**

1. Procédé d'estimation du rapport entre la pression en amont et la pression en aval de la turbine d'un turbocompresseur d'un véhicule automobile, **caractérisé par le fait qu'**il comprend les étapes suivantes :

   on obtient l'estimation du débit massique de la turbine, de la vitesse de rotation de la turbine et de la température en amont de la turbine et la mesure de la position des ailettes de la turbine à géométrie variable et de la pression en aval de la turbine,
   on initialise l'estimateur avec la valeur estimée du rapport de pressions à l'instant de calcul présent estimée à l'instant de calcul précédent ou si elle n'est pas disponible, avec une mesure de la pression en amont de la turbine ou avec une valeur prédéterminée issue d'une cartographie,
   on détermine la valeur d'une première variable interne en fonction de l'estimation du débit massique de la turbine, de la vitesse de rotation de la turbine et de la température en amont de la turbine et de la mesure de la position des ailettes de la turbine à géométrie variable et de la pression en aval de la turbine ainsi que de la valeur d'initialisation de l'estimateur et d'une fonction de calcul,
   on détermine la valeur d'une deuxième variable interne en fonction de l'estimation du débit massique de la turbine, de la vitesse de rotation de la turbine et de la température en amont de la turbine et de la mesure de la position des ailettes de la turbine à géométrie variable et de la pression en aval de la turbine, de la somme de la valeur d'initialisation de l'estimateur et d'une variation de rapport de pressions et de la fonction de calcul,
   on détermine la dérivée de la fonction de calcul par rapport à la variation de rapport de pressions, en fonction de la valeur de la première variable interne, de la valeur de la deuxième variable interne et de la variation de rapport de pressions, et
   on obtient la valeur estimée du rapport de pressions à l'instant de calcul suivant en fonction de la dérivée de la fonction de calcul par rapport à la variation de rapport de pressions, de la valeur de la première variable interne et de la valeur d'initialisation de l'estimateur.

2. Procédé d'estimation selon la revendication 1, dans lequel on détermine ladite variation de rapport de pressions en fonction de la valeur estimée du rapport de pressions à l'instant de calcul présent.

3. Procédé d'estimation selon la revendication 1, dans lequel on fournit une valeur mémorisée de la variation de rapport de pressions.

4. Système d'estimation du rapport entre la pression en amont et la pression en aval de la turbine d'un turbocompresseur d'un véhicule automobile, **caractérisé par le fait qu'**il comprend
   un moyen d'initialisation de l'estimateur comprenant au moins un élément parmi une mémoire comprenant la valeur estimée du rapport de pressions à l'instant de calcul précédent, une connexion à un capteur de pression en amont de la turbine ou une cartographie d'une valeur d'initialisation,
   un moyen d'estimation de la valeur d'une première variable interne relié en entrée à des moyens de détermination des valeurs du débit massique de la turbine, de la vitesse de rotation de la turbine et de la température en amont de la turbine, de la position des ailettes de la turbine à géométrie variable et de la pression après la turbine et au moyen d'initialisation de l'estimateur et à un moyen de calcul comprenant une fonction de calcul,
   un moyen d'estimation de la valeur d'une deuxième variable interne relié en entrée à des moyens de détermination des valeurs du débit massique de la turbine, de la vitesse de rotation de la turbine et de la température en amont de la turbine, de la position des ailettes de la turbine à géométrie variable et de la pression en aval de la turbine et à un sommateur relié au moyen d'initialisation de l'estimateur et à un moyen d'initialisation de la valeur d'une variation de rapport de pressions et au moyen de calcul comprenant la fonction de calcul,
   un moyen d'estimation de la dérivée de la fonction de calcul par rapport à la variation de rapport de pressions relié en entrée au moyen d'estimation de la valeur de la première variable interne et au moyen d'estimation de la valeur de la deuxième variable interne, et
   un moyen d'estimation de la valeur du rapport de pressions à l'instant de calcul suivant relié en entrée au moyen d'estimation de la dérivée de la fonction de calcul par rapport à la variation de rapport de pressions, au moyen d'initialisation de l'estimateur et au moyen d'estimation de la valeur de la première variable interne.

5. Système d'estimation selon la revendication 4, dans lequel le moyen d'initialisation de la valeur de ladite variation de rapport de pressions comprend une mémoire comprenant ladite valeur de variation de rapport de pressions.

6. Système d'estimation selon la revendication 4, dans lequel le moyen d'initialisation de la valeur de ladite variation de rapport de pressions comprend un moyen d'estimation en fonction de la valeur estimée du rapport de pressions à l'instant de calcul précédent.

**Patentansprüche**

1. Verfahren zur Schätzung des Verhältnisses zwischen dem Druck stromaufwärts und dem Druck stromabwärts der Turbine eines Turbokompressors eines Kraftfahrzeugs, **dadurch gekennzeichnet, dass** es die folgenden Schritte umfasst:

es werden die Schätzung des Massendurchsatzes der Turbine, der Drehzahl der Turbine und der Temperatur stromaufwärts der Turbine und der Messwert der Position der Schaufeln der Turbine mit variabler Geometrie und des Drucks stromabwärts der Turbine gewonnen,
es wird die Schätzfunktion mit dem geschätzten Wert des Druckverhältnisses zum gegenwärtigen Berechnungszeitpunkt, der zum vorhergehenden Berechnungszeitpunkt geschätzt wurde, initialisiert, oder, falls dieser nicht verfügbar ist, mit einem Messwert des Drucks stromaufwärts der Turbine oder mit einem vorbestimmten Wert, der aus einem Kennfeld stammt,
es wird der Wert einer ersten internen Variablen in Abhängigkeit von der Schätzung des Massendurchsatzes der Turbine, der Drehzahl der Turbine und der Temperatur stromaufwärts der Turbine und vom Messwert der Position der Schaufeln der Turbine mit variabler Geometrie und des Drucks stromabwärts der Turbine sowie vom Initialisierungswert der Schätzfunktion und von einer Berechnungsfunktion bestimmt,
es wird der Wert einer zweiten internen Variablen in Abhängigkeit von der Schätzung des Massendurchsatzes der Turbine, der Drehzahl der Turbine und der Temperatur stromaufwärts der Turbine und vom Messwert der Position der Schaufeln der Turbine mit variabler Geometrie und des Drucks stromabwärts der Turbine, von der Summe des Initialisierungswertes der Schätzfunktion und einer Änderung des Druckverhältnisses und von der Berechnungsfunktion bestimmt,
es wird die Ableitung der Berechnungsfunktion nach der Änderung des Druckverhältnisses in Abhängigkeit vom Wert der ersten internen Variablen, vom Wert der zweiten internen Variablen und von der Änderung des Druckverhältnisses bestimmt, und
es wird der geschätzte Wert des Druckverhältnisses zum folgenden Berechnungszeitpunkt in Abhängigkeit von der Ableitung der Berechnungsfunktion nach der Änderung des Druckverhältnisses, vom Wert der ersten internen Variablen und vom Initialisierungswert der Schätzfunktion gewonnen.

2. Verfahren zur Schätzung nach Anspruch 1, wobei die Änderung des Druckverhältnisses in Abhängigkeit von dem geschätzten Wert des Druckverhältnisses zum gegenwärtigen Berechnungszeitpunkt bestimmt wird.

3. Verfahren zur Schätzung nach Anspruch 1, wobei ein gespeicherter Wert der Änderung des Druckverhältnisses geliefert wird.

4. System zur Schätzung des Verhältnisses zwischen dem Druck stromaufwärts und dem Druck stromabwärts der Turbine eines Turbokompressors eines Kraftfahrzeugs, **dadurch gekennzeichnet, dass** es umfasst:

ein Mittel zur Initialisierung der Schätzfunktion, welches wenigstens ein Element von einem Speicher, der den geschätzten Wert des Druckverhältnisses zum gegenwärtigen Berechnungszeitpunkt umfasst, einer Verbindung zu einem Drucksensor stromaufwärts der Turbine oder einem Kennfeld eines Initialisierungswertes umfasst,
ein Mittel zur Schätzung des Wertes einer ersten internen Variablen, das am Eingang mit Mitteln zur Bestimmung der Werte des Massendurchsatzes der Turbine, der Drehzahl der Turbine und der Temperatur stromaufwärts der Turbine, der Position der Schaufeln der Turbine mit variabler Geometrie und des Druckes nach der Turbine und mit dem Mittel zur Initialisierung der Schätzfunktion und mit einem Berechnungsmittel, das eine Berechnungsfunktion umfasst, verbunden ist,

ein Mittel zur Schätzung des Wertes einer zweiten internen Variablen, das am Eingang mit Mitteln zur Bestimmung der Werte des Massendurchsatzes der Turbine, der Drehzahl der Turbine und der Temperatur stromaufwärts der Turbine, der Position der Schaufeln der Turbine mit variabler Geometrie und des Druckes stromabwärts der Turbine und mit einem Summierer, der mit dem Mittel zur Initialisierung der Schätzfunktion und mit einem Mittel zur Initialisierung des Wertes einer Änderung des Druckverhältnisses verbunden ist, und mit dem Berechnungsmittel, das die Berechnungsfunktion umfasst, verbunden ist,

ein Mittel zur Schätzung der Ableitung der Berechnungsfunktion nach der Änderung des Druckverhältnisses, das am Eingang mit dem Mittel zur Schätzung des Wertes der ersten internen Variablen und mit dem Mittel zur Schätzung des Wertes der zweiten internen Variablen verbunden ist, und

ein Mittel zur Schätzung des Wertes des Druckverhältnisses zum folgenden Berechnungszeitpunkt, das am Eingang mit dem Mittel zur Schätzung der Ableitung der Berechnungsfunktion nach der Änderung des Druckverhältnisses, mit dem Mittel zur Initialisierung der Schätzfunktion und mit dem Mittel zur Schätzung des Wertes der ersten internen Variablen verbunden ist.

**5.** System zur Schätzung nach Anspruch 4, wobei das Mittel zur Initialisierung des Wertes der Änderung des Druckverhältnisses einen Speicher umfasst, der den Wert der Änderung des Druckverhältnisses umfasst.

**6.** System zur Schätzung nach Anspruch 4, wobei das Mittel zur Initialisierung des Wertes der Änderung des Druckverhältnisses ein Mittel zur Schätzung in Abhängigkeit von dem geschätzten Wert des Druckverhältnisses zum vorhergehenden Berechnungszeitpunkt umfasst.

**Claims**

**1.** Method for estimating the ratio between the upstream pressure and the downstream pressure in the turbine of a motor vehicle turbocharger, **characterized in that** it comprises the following steps:

obtaining an estimate of the mass flow of the turbine, of the rotation speed of the turbine and of the upstream temperature of the turbine, as well as the measurement of the position of the variable-geometry blades of the turbine and of the downstream pressure of the turbine,

initializing the estimator with the estimated value of the pressure ratio at the present instant of calculation, estimated at the preceding instant of calculation or, if it is not available, with a measurement of the upstream pressure of the turbine or with a predetermined value obtained from a map,

determining the value of a first internal variable on the basis of the estimate of the mass flow of the turbine, of the rotation speed of the turbine and of the upstream temperature of the turbine, as well as the measurement of the position of the variable-geometry blades of the turbine and of the downstream pressure of the turbine, together with the initialization value of the estimator and a calculation function,

determining the value of a second internal variable on the basis of the estimate of the mass flow of the turbine, the rotation speed of the turbine and the upstream temperature of the turbine, and on the basis of the measurement of the position of the variable-geometry blades of the turbine, the downstream pressure of the turbine, the sum of the initialization value of the estimator and a pressure ratio variation and the calculation function,

determining the derivative of the calculation function with respect to the pressure ratio variation, on the basis of the value of the first internal variable, of the value of the second internal variable and of the pressure ratio variation, and

obtaining the estimated value of the pressure ratio at the next instant of calculation on the basis of the derivative of the calculation function with respect to the pressure ratio variation, the value of the first internal variable, and the initialization value of the estimator.

**2.** Estimation method according to Claim 1, wherein said pressure ratio variation is determined on the basis of the estimated value of the pressure ratio at the present instant of calculation.

**3.** Estimation method according to Claim 1, wherein a stored value of the pressure ratio variation is provided.

**4.** System for estimating the ratio between the upstream pressure and the downstream pressure in the turbine of a motor vehicle turbocharger, **characterized in that** it comprises:

a means for initializing the estimator comprising at least one element chosen from among a memory including the estimated value of the pressure ratio at the preceding instant of calculation, a connection to an upstream pressure sensor of the turbine, and a map of an initialization value,

a means for estimating the value of a first internal variable, with its input connected to means for determining the values of the mass flow of the turbine, the rotation speed of the turbine and the upstream temperature of the turbine as well as the position of the variable-geometry blades of the turbine and the downstream pressure of the turbine, and to the means for initializing the estimator and to a calculation means comprising a calculation function,

a means for estimating the value of a second internal variable, with its input connected to means for determining the values of the mass flow of the turbine, the rotation speed of the turbine and the upstream temperature of the turbine as well as the position of the variable-geometry blades of the turbine and the downstream pressure of the turbine, and to an adder connected to the means for initializing the estimator and to a means for initializing the value of a pressure ratio variation and to the calculation means comprising the calculation function,

a means for estimating the derivative of the calculation function with respect to the pressure ratio variation, with its input connected to the means for estimating the value of the first internal variable and to the means for estimating the value of the second internal variable, and

a means for estimating the value of the pressure ratio at the next instant of calculation, with its input connected to the means for estimating the derivative of the calculation function with respect to the pressure ratio variation, to the means for initializing the estimator, and to the means for estimating the value of the first internal variable.

5. Estimation system according to Claim 4, wherein the means for initializing the value of said pressure ratio variation comprises a memory including said value of the pressure ratio variation.

6. Estimation system according to Claim 4, wherein the means for initializing the value of said pressure ratio variation comprises a means for estimation on the basis of the estimated value of the pressure ratio at the preceding instant of calculation.

FIGURE UNIQUE

**EP 2 815 114 B1**

## RÉFÉRENCES CITÉES DANS LA DESCRIPTION

**Documents brevets cités dans la description**

- US 2012023932 A